# EUROPÄISCHE PATENTSCHRIFT

(11) **EP 3 797 575 B1**
(45) Veröffentlichungstag und Bekanntmachung des Hinweises auf die Patenterteilung: **28.06.2023**
(21) Anmeldenummer: 20186666.2
(22) Anmeldetag: 20.07.2020
(51) Int. Cl.: A01D 41/127, A01F 12/58, A01F 12/18

(54) **MÄHDRESCHER MIT FAHRERASSISTENZSYSTEM**
COMBINE HARVESTER WITH DRIVER ASSISTANCE SYSTEM
MOISSONNEUSE-BATTEUSE AVEC SYSTÈME D'ASSISTANCE AU CONDUCTEUR

(30) Priorität: 24.09.2019 DE 102019125645
(43) Veröffentlichungstag der Anmeldung: 31.03.2021
(73) Patentinhaber: CLAAS Selbstfahrende Erntemaschinen GmbH, 33428 Harsewinkel (DE)
(72) Erfinder: Bußmann, Jens, 49179 Ostercappeln (DE)
(74) Vertreter: CLAAS Gruppe

(56) Entgegenhaltungen:
- EP-A1- 3 494 774
- DE-A1- 4 406 140
- DE-A1- 10 307 705
- DE-A1-102006 015 152
- US-A1- 2016 081 271

## Beschreibung

Die vorliegende Erfindung betrifft einen Mähdrescher mit einem Fahrerassistenzsystem zum Optimieren der Wirtschaftlichkeit des Mähdreschers im Betrieb.

Ein Mähdrescher umfasst herkömmlicherweise eine Verarbeitungsstufe zum Verarbeiten von aufgenommenem Erntegut, insbesondere zum Dreschen und Trennen eines Erntegutstroms in einen an ausgedroschenen Körnern reichen Nutzstrom und einen kornarmen Reststrom.

Betriebsparameter der Verarbeitungsstufe wie etwa die Geschwindigkeiten von bewegten Komponenten oder Spaltbreiten zwischen Komponenten beeinflussen in schwer abschätzbarer Weise für die Wirtschaftlichkeit des Betriebs bedeutsame Größen wie etwa Kraftstoffverbrauch, Reinheit und Bruchkornanteil des Nutzstroms, und Kornanteil im Reststrom. Für einen Fahrer des Mähdreschers ist es daher ohne technische Hilfsmittel kaum möglich, die Betriebsparameter unter wirtschaftlichen Gesichtspunkten zu optimieren.

Auch der Einsatz technischer Hilfsmittel bei der Optimierung der Betriebsparameter kann aber letztlich nur dann zu einem befriedigenden Ergebnis führen, wenn die dafür benötigten Messdaten gemessen werden können.

Aus DE 10 2006 015 152 A1 ist bekannt, in einem Auswurfkanal eines Mähdreschers, über den der Reststrom wieder auf das Feld ausgebracht wird, einen Kornsensor anzubringen, der aus der Intensität eines Geräuschs, das die Körner des Reststroms beim Aufprall auf eine Oberfläche erzeugen, einen Rückschluss auf Menge der Körner in dem Reststrom und, basierend hierauf, eine Optimierung des Dresch- und Trennvorgangs ermöglicht. Der Restkornsensor spricht nur an auf ausgedroschene Körner an. Sogenannter Ausdruschverlust, d.h. Körner, bei denen bereits das Ausdreschen nicht gelungen ist und die bei Erreichen des Sensors noch an der Ähre oder deren Bruchstücken hängen, wird nicht erfasst. Den Ausdruschverlust aus dem auf dem Feld abgelegten Schwad zu ermitteln ist zeitaufwendig, außerdem ist der Nutzen einer Nutzen einer solchen Ermittlung begrenzt, da sich in der zum Ermitteln der Ausdruschverluste benötigten Zeit die Betriebsbedingungen des Mähdreschers so stark geändert haben können, dass eine in Anbetracht der Ausdruschverluste beschlossene Änderung der Betriebsparameter zu dem Zeitpunkt, an dem sie zur Verfügung steht, möglicherweise bereits veraltet ist und die Dreschergebnisse nicht verbessert. Außerdem ist eine Verringerung des Ausdruschverlusts zwar theoretisch durch intensiveres Dreschen leicht erreichbar, kann aber aufgrund der damit verbundenen Erhöhung des Energieverbrauchs und des Bruchkornanteils wirtschaftlich nachteilig sein.

Aus der DE 44 06 140 A1 ist ein gattungsgemäßer Mähdrescher bekannt.

Um einen Mähdrescher wirtschaftlich betreiben zu können, wäre daher ein Fahrerassistenzsystem wünschenswert, das in der Lage ist, Daten über den Ausdruschverlust in Echtzeit zu gewinnen und bei der Steuerung einer Verarbeitungsstufe des Mähdreschers zu berücksichtigen.

Dieses Ziel wird erfindungsgemäß durch einen Mähdrescher mit einem Fahrerassistenzsystem erreicht, bei dem eine Verarbeitungsstufe des Mähdreschers einen Eingang für einen Erntegutstrom, einen ersten Ausgang für einen aus dem Erntegutstrom gewonnenen, an ausgedroschenen Körnern reichen Nutzstrom und einen zweiten Ausgang für einen kornarmen Reststrom aufweist, wobei wenigstens ein Betriebsparameter der Verarbeitungsstufe verstellbar ist, wobei das Fahrerassistenzsystem umfasst: eine zuschaltbare Nachdrescheinrichtung zur Anbringung am zweiten Ausgang der Verarbeitungsstufe, einen Restkornsensor zum Erfassen eines Anteils von ausgedroschenen Körnern im Reststrom stromabwärts von der Nachdrescheinrichtung und eine Auswerteeinrichtung, die eingerichtet ist, die Nachdrescheinrichtung zu- und abzuschalten, die Anteile von ausgedroschenen Körnern im Reststrom bei zugeschalteter und bei abgeschalteter Nachdrescheinrichtung zu vergleichen und den wenigstens einen Betriebsparameter der Verarbeitungsstufe anhand des Vergleichs anzupassen.

Indem die zuschaltbare Drescheinrichtung als Nachdrescheinrichtung am zweiten Ausgang der Verarbeitungsstufe platziert ist, hat die Frage, ob die Nachdrescheinrichtung zugeschaltet ist oder nicht, keinen Einfluss auf die stromaufwärts vom zweiten Ausgang stattfindende Verarbeitung. Dies erleichtert das Finden einer angemessenen Einstellung des wenigstens einen Betriebsparameters anhand der Daten des Kornsensors. Die Nachteile des intensiven Dreschens, erhöhter Energieverbrauch und erhöhter Bruchkornanteil, treten nur in denjenigen Betriebsphasen des Mähdreschers auf, in denen die Nachdrescheinrichtung tatsächlich in Betrieb ist. Deren Anteil an der Gesamtbetriebszeit des Mähdreschers kann je nach Bedarf klein gewählt werden, so dass die Messung über die Gesamtbetriebszeit gemittelt nur minimale Auswirkungen auf den Energieverbrauch des Mähdreschers und den Bruchkornanteil hat.

Eine hohe Differenz zwischen den bei zugeschalteter bzw. ausgeschalteter Nachdrescheinrichtung gemessenen Anteilen von ausgedroschenen Körnern im Reststrom weist hin auf einen hohen Ausdruschverlust. Deshalb ist die Auswerteeinrichtung vorzugsweise eingerichtet, den wenigstens einen Betriebsparameter zu verändern, wenn die Differenz eine Schwelle überschreitet.

Die zuschaltbare Nachdrescheinrichtung kann durch wenigstens ein radial verstellbares Segment eines Abscheidekorbs gebildet sein. Indem durch die radiale Verstellung die Breite eines von dem Reststrom durchlaufenen Spalts verändert wird, kann die Wirkung der Nachdrescheinrichtung moduliert werden.

Die radiale Verstellung kann robust und kostengünstig durch Schwenken des verstellbaren Segments um eine Achse bewirkt werden.

Die Achse verläuft vorzugsweise benachbart zu einem Rand des verstellbaren Segments. Insbesondere kann das verstellbare Segment sich in Umfangsrichtung eines Trennrotors über einen Teil von dessen Umfang erstrecken und die Achse benachbart zu einem bezogen auf die Drehrichtung des Trennrotors vorderen Rand des verstellbaren Segments verläuft. So kann, wenn die Nachdrescheinrichtung durch ein Einwärtsschwenken des verstellbaren Segments zugeschaltet wird, zwischen diesem und dem Trennrotor ein sich in Drehrichtung des Trennrotors kontinuierlich verengender Spalt gebildet werden, und die Dreschwirkung verteilt sich gleichmäßig über die gesamte Ausdehnung des Segments.

Die Verarbeitungsstufe umfasst typischerweise eine Dreschstufe und eine Trennstufe, wobei der oben erwähnte wenigstens eine Betriebsparameter ein Betriebsparameter der Dreschstufe oder der Trennstufe sein kann.

Ein Eingang der Trennstufe und der zweite Ausgang sollten sich an entgegengesetzten Enden der Trennstufe befinden.

Bezogen auf eine Förderrichtung des Ernteguts vom Eingang zum zweiten Ausgang kann die Trennstufe einen stromaufwärtigen Abschnitt, in dem sich der erste Ausgang befindet, und einen stromabwärtigen Abschnitt aufweisen, in dem sich die Nachdrescheinrichtung befindet. Die Nachdrescheinrichtung dient dann ausschließlich der Erhöhung des von Kornsensor erfassbaren Anteils isolierter Körner im Reststrom, und von der Nachdrescheinrichtung zusätzlich ausgedroschene Körner durchlaufen sämtlich den zweiten Ausgang und sind mittels des Kornsensors nachweisbar, was die Auswertung des Sensorsignals und dessen Umrechnung in eine Kornmenge vereinfacht.

Einer bevorzugten Alternative zufolge ist der erste Ausgang bezogen auf eine Förderrichtung des Ernteguts vom Eingang zum zweiten Ausgang langgestreckt, und ein Abschnitt der Trennstufe, in dem sich die Nachdrescheinrichtung befindet, überlappt in der Förderrichtung mit einem stromabwärtigen Ende des ersten Ausgangs. So können von den von der Nachdrescheinrichtung zusätzlich ausgedroschenen Körnern welche dem Nutzstrom zugeführt werden.

Außerdem können an dem zweiten Ausgang weitere Nachdrescheinrichtungen vorgesehen sein, die nicht zuschaltbar, sondern während eines Ernteeinsatzes ständig in Betrieb sind. Der Energieaufwand für deren Betrieb ist gerechtfertigt, weil von dem von diesen Nachdrescheinrichtungen ausgedroschenes Korn wenigstens zum Teil über den überlappenden ersten Ausgang in den Nutzstrom gelangen und so die Ausbeute verbessen kann.

Die weiteren Nachdrescheinrichtungen können durch zum radial verstellbaren Segment in Umfangsrichtung benachbarte Segmente des Abscheidekorbs gebildet sein.

Der Trennrotor kann in einem bezogen auf die Förderrichtung stromaufwärtigen Abschnitt mit einem ersten Typ von Werkzeugen und in einem stromabwärtigen Abschnitt mit einem zweiten Typ von Werkzeugen bestückt sein, die im stromaufwärtigen Abschnitt fehlen. Diese Werkzeuge des zweiten Typs können im Hinblick auf ihre Dreschwirkung im Zusammenwirken mit der zuschaltbaren Nachdrescheinrichtung und ggf. den weiteren Nachdrescheinrichtungen optimiert sein.

Die Werkzeuge des zweiten Typs sollten in der Förderrichtung mit der zuschaltbaren Nachdrescheinrichtung überlappen.

Gegenstand der Erfindung ist auch ein Mähdrescher mit einem Fahrerassistenzsystem wie oben beschrieben.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch den hinteren Bereich eines Mähdreschers gemäß der vorliegenden Erfindung;
- Fig. 2: das vordere Ende eines in dem Mähdrescher verwendeten Trennrotors;
- Fig. 3: das hintere Ende eines in dem Mähdrescher verwendeten Trennrotors;
- Fig. 4: eine perspektivische Ansicht eines mit dem Trennrotor zusammenwirkenden Abscheidekorbs mit einer zuschaltbaren Nachdrescheinrichtung;
- Fig. 5: einen axialen Schnitt durch den Trennrotor und den Abscheidekorb mit der zuschaltbaren Nachdrescheinrichtung in einer Ruhestellung; und
- Fig. 6: einen zu Fig. 5 analogen Schnitt mit der Nachdrescheinrichtung in zugeschalteter Stellung.

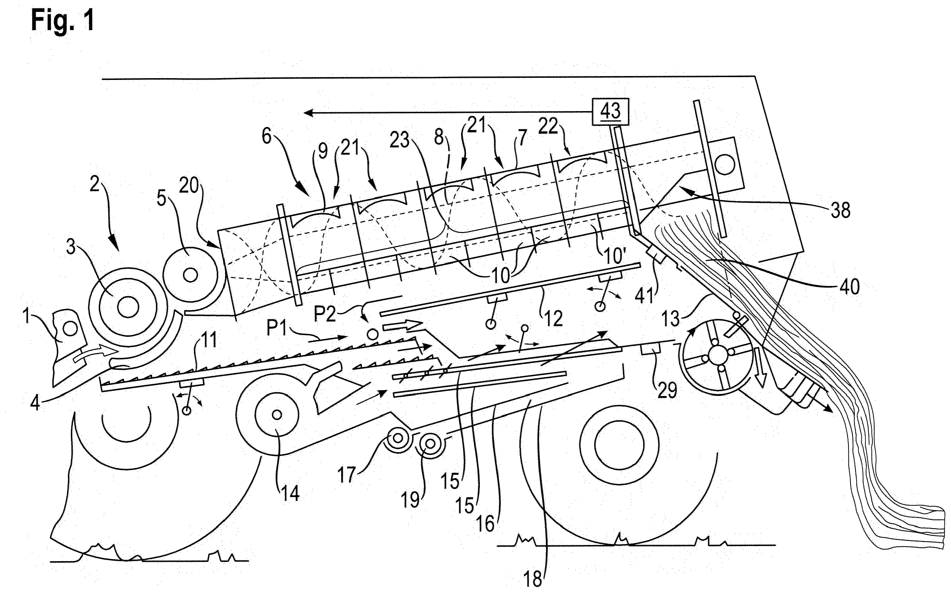

Fig. 1 zeigt einen schematischen Schnitt durch den hinteren Bereich eines Mähdreschers. Bei diesem Mähdrescher kann es sich insbesondere um den in EP 3 076 248 A1 beschriebenen Mähdrescher handeln, wie später noch genauer erläutert wird.

Ein Erntegutstrom von gemähtem Getreide wird durch einen an sich bekannten Erntevorsatz im nicht dargestellten vorderen Bereich des Mähdreschers gemäht und aufgenommen und von einer nur ausschnittweise dargestellten Fördereinrichtung 1 einer tangential wirkenden Drescheinrichtung 2 zugeführt. Die Drescheinrichtung 2 ist im wesentlichen aufgebaut aus einer Dreschtrommel 3 mit quer zur Fahrrichtung des Mähdreschers orientierter Achse, die an ihrem Außenmantel mit Reibelementen bestückt ist und auf einem Teil ihres Umfangs von einem Dreschkorb 4 umgeben ist. Ein Teil der in der Drescheinrichtung 2 von den Halmen getrennten Körner fällt durch Löcher des Dreschkorbes 4 auf einen Förderboden 11, auf dem diese, wie durch einen Pfeil P1 angedeutet, entgegen der Fahrtrichtung des Mähdreschers durch Rüttelbewegungen gefördert werden.

Der überwiegende Teil des Erntegutes wird jedoch zwischen Dreschtrommel 3 und Dreschkorb 4 hindurchgeführt und mit Unterstützung durch eine Leittrommel 5 einer Trennstufe 6 zugeführt.

Die Trennstufe 6 umfasst ein zylindrisches, an seinen Enden offenes Gehäuse 7 und einen sich in dem Gehäuse 7 über seine gesamte Länge erstreckenden, in Fig. 1 als gestrichelter Umriss eingezeichneten Trennrotor 8. Eines der offenen Enden des Gehäuses 7 dient als Eingang 20, über den der Erntegutstrom in die Trennstufe 6 eingespeist wird.

Das Gehäuse 7 ist aus mehreren in axialer Richtung aufeinanderfolgenden rohrförmigen Abschnitten 21, 22 zusammengefügt, die jeweils in einem oberen Umfangsbereich geschlossene Wände aufweisen und in einem unteren Umfangsbereich einen Abscheidekorb 10 aufweisen, über den in dem geförderten Erntegutstrom enthaltene Körner die Trennstufe 6 verlassen können. Die Abscheidekörbe 10 bilden so einen sich in Längsrichtung des Gehäuses 7 erstreckenden Ausgang 23 für einen an Körnern reichen Nutzstrom.

Der Nutzstrom erreicht einen Rückführboden 12. Dieser Rückführboden 12 ist rüttelnd bewegt, so dass auf ihm gesammeltes Material in Fahrtrichtung des Mähdreschers in Richtung des Pfeils P2 befördert wird und schließlich auf dem Förderboden 11 mit dem bereits in der Drescheinrichtung 2 abgeschiedenen Korn zusammentrifft.

Der Förderboden 11 fördert den Nutzstrom zu einer Reinigungsstufe. Diese ist im wesentlichen aufgebaut aus einem Gebläse 14 und einer im Windstrom des Gebläses 14 liegenden Gruppe von Siebböden 15, die in einem nicht dargestellten Rahmengestell zu einer Schwingbewegung angetrieben sind und mit dem Nutzstrom beschickt werden. Das im Nutzstrom enthaltene Korn rieselt durch die schwingenden Siebböden 15 hindurch auf einen abschüssigen ersten Leitboden 16. Am unteren Ende des Leitbodens 16 ist eine Förderschnecke 17 angeordnet, die das Korn zu einem Elevator (nicht dargestellt) und über diesen in einen Korntank (nicht dargestellt) fördert.

Leichte Bestandteile des Nutzstroms werden während des Siebens vom Wind des Gebläses 14 mitgenommen und aus dem Mähdrescher ausgeschieden. Bestandteile des Nutzstroms, die die Siebböden 15 auf ihrer gesamten Länge überquert haben, ohne durchgesiebt oder vom Gebläsewind mitgenommen zu werden, fallen schließlich auf einen zweiten abschüssigen Leitboden 18 und werden von einer an dessen unteren Ende angeordneten Förderschnecke 19 zurück zur Drescheinrichtung 2 oder zur Trennstufe 6 gefördert, um diese erneut zu durchlaufen.

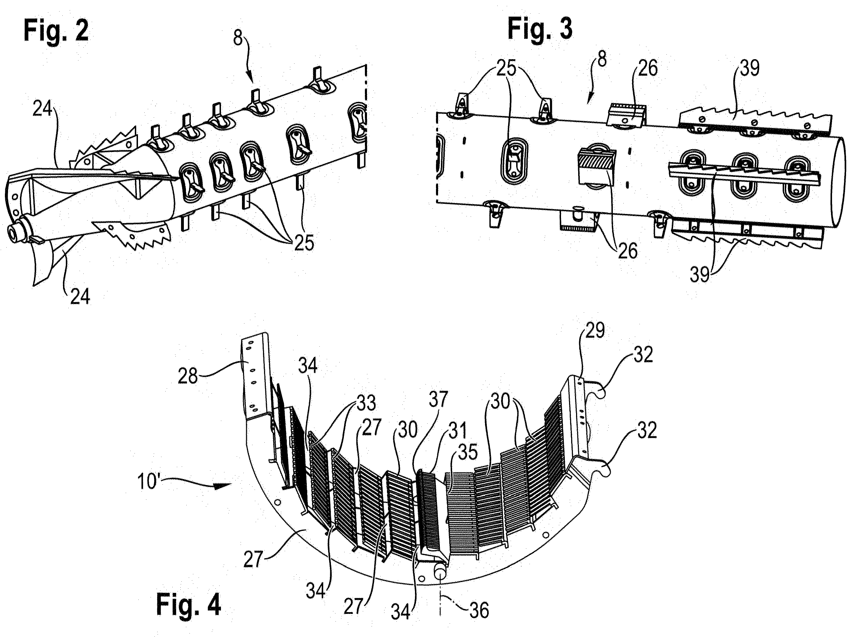

Wie in Fig. 2 zu sehen, ist der Trennrotor 8 an seinem dem Eingang 20 zugewandten Ende mit wendelförmigen Rippen 24 besetzt, deren Rotation das am Eingang 20 eintretende Erntegut zu einer Bewegung auf einer schraubenlinienförmig um die Drehachse des Trennrotors 8 verlaufenden Bahn antreibt.

In einem zweiten Bereich des Trennrotors 8 fehlen die Rippen 24, stattdessen trägt der Trennrotor 8 eine Vielzahl von über den Umfang und entlang der Drehachse verteilten Stiften 25. Da diese das Erntegut nur zu einer Umlaufbewegung um die Drehachse antreiben können, sind zur Erzeugung der notwendigen Förderwirkung entlang der Drehachse und zum Durchkneten des Ernteguts wendelförmige Rippen 9 an einer Innenseite des Gehäuses 7 vorgesehen.

Auf die Stifte 25 folgen in einem dritten Bereich des Trennrotors 8, wie in Fig. 3 gezeigt, entlang der Achse langgestreckte Dreschbalken 26. Dieser dritte Bereich ist vom letzten 22 der rohrförmigen Gehäuseabschnitte umschlossen.

Fig. 4 zeigt in einer perspektivischen Ansicht einen Dresch- oder Abscheidekorb 10', der einen unteren Teil dieses Gehäuseabschnitts 22 bildet. Der Abscheidekorb 10' hat in etwa die Form eines Hohlzylindersektors, der sich über einen Winkel von knapp 180° um die Achse des Trennrotors 8 erstreckt. Er umfasst zwei oder mehr zueinander parallele, zur Achse des Trennrotors 8 konzentrische Trägerbögen 27. Die Trägerbögen 27 sind untereinander durch Stirnleisten 28, 29 und eine Mehrzahl von in Umfangsrichtung entlang der Trägerbögen 27 verteilten axial langgestreckten Segmenten 30, 31 verbunden. Eine der Stirnleisten 28 ist vorgesehen, um lösbar, z.B. mit Hilfe von Bohrungen der Stirnleiste 28 durchsetzenden Schrauben, an einem nicht dargestellten oberen Teil des Gehäuseabschnitts befestigt zu werden, die andere Stirnleiste 29 ist mit Scharnierelementen, hier Haken 32, versehen, die mit komplementären Scharnierelementen des oberen Teils zusammenwirken, um, wenn die Verbindung der Stirnleiste 28 mit dem oberen Teil gelöst ist, den Abscheidekorb 10' schwenken und den Trennrotor 8 freilegen zu können.

Die Segmente 30, 31 sind jeweils als Reibleisten, mit einer dem Trennrotor 8 zugewandten, in axialer Richtung und in Umfangsrichtung des Trennrotors ausgedehnten Reibfläche, ausgebildet.

Eine Mehrheit der Segmente 30 ist unbeweglich an den Trägerbögen 27 montiert. Ihre Reibflächen sind jeweils gegen die Umfangsrichtung so geneigt, dass der Abstand zwischen einem Punkt eines Dreschbalkens 26 und dem ihm in radialer Richtung gegenüberliegenden Punkt eines Segments 30 im Laufe der Drehung abnimmt. So wird das Erntegut, das sich zwischen diesen Punkten befindet, im Laufe der Bewegung in Umfangsrichtung über das Segment 30 hinweg allmählich verdichtet und so einer zunehmenden dreschwirksamen Scherbelastung ausgesetzt, bis es schließlich, nach Passieren der hinteren Kante 33 des Segments 30, wieder expandieren kann. Körner, die auf diese Weise nachträglich ausgedroschen worden sind, können sich infolge der Expansion wieder durch das Erntegut bewegen und über einen Spalt 34 zwischen dem Segment 30 und einem darauffolgenden Segment die Trennstufe 6 verlassen und auf den Rückführboden 12 gelangen. Die Spalte 34 bilden daher einen Teil des sich entlang der Trennstufe 6 erstreckenden Ausgangs 23.

Wenigstens eines der Segmente, mit 31 bezeichnet, ist um eine zu seiner vorderen Kante 35 benachbarte Achse 36 zwischen einer Ruhestellung und einer Wirkstellung schwenkbar. In der Wirkstellung ist der Spalt zwischen einer hinteren Kante 37 des Segments 31 und einem sich daran vorbeibewegenden Dreschbalken 26 kleiner als bei den hinteren Kanten 33 der Segmente 30; in der Ruhestellung ist der Spalt genauso groß wie letztere oder größer.

Nach Durchlaufen des Gehäuseabschnitts 22 erreicht, wie wieder in Fig. 1 gezeigt, ein an Korn verarmter Reststrom von Erntegut einen Ausgang 38 der Trennstufe. Ein in diesen Ausgang 38 hineinragendes Ende des Trennrotors 8 ist mit radial abstehenden Rippen 39 versehen (s. Fig. 3), die das Erntegut radial fortschleudern; das Gehäuse 7 umschließt den Trennrotor 8 nur nach oben, so dass der Reststrom in einen nach unten abzweigenden Auswurfkanal 40 abfließt. In diesem Auswurfkanal 40 ist ein Kornsensor 41 an einer den Reststrom ablenkenden Prallfläche 42 angebracht. Eine Auswerteschaltung 43 ist an den Kornsensor 41 angeschlossen, um aus dem vom Kornsensor 41 aufgezeichneten Geräusch einen auf ausgedroschene, einzelne Körner zurückzuführenden Spektralanteil auszufiltern und basierend auf der Intensität dieses Spektralanteils die Menge an einzelnen Körnern im Reststrom abzuschätzen.

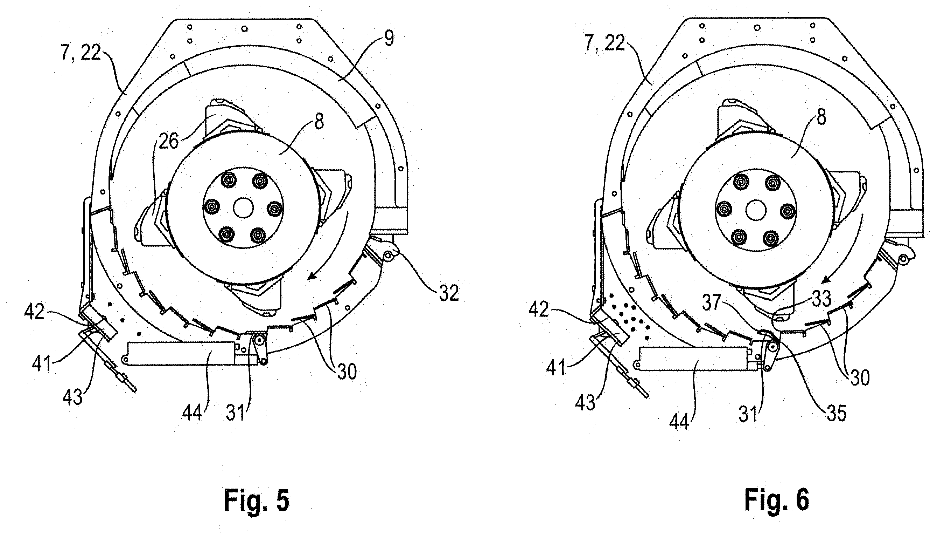

Die Auswerteschaltung 43 steuert ferner einen (in Fig. 4 und 5 gezeigten) hydraulischen oder pneumatischen Stellzylinder 44 zum Verstellen des Segments 31.

Die Auswertung des Signals des Kornsensors 41 durch die Auswerteschaltung 43 erfolgt je nach Stellung des Segments 31 getrennt. Von der Stellung des Segments 31 abhängige Unterschiede des Signals sind zurückzuführen auf Körner, die in der Wirkstellung des Segments 31 ausgedroschen wurden, die aber in der Ruhestellung die Trennstufe 6 durchlaufen hätten, ohne ausgedroschen zu werden. Die Größe dieses Unterschieds ist daher ein Maß für den Ausdruschverlust, das im laufenden Erntevorgang genutzt werden kann, um Betriebsparameter der Drescheinrichtung 2, der Trennstufe 6 oder der Reinigungsstufe zu optimieren.

Um eine solche Optimierung vornehmen zu können, kann vorgesehen werden, dass der von der Auswerteschaltung 43 abgeschätzte Ausdruschverlust sowie der in der Ruhestellung des Segments 31 ermittelte Kornanteil im Reststrom auf einem mit der Auswerteschaltung 43 verbundenen Anzeigeinstrument dem Fahrer des Mähdreschers angezeigt werden und es diesem überlassen wird, anhand der angezeigten Werte die Betriebsparameter zu optimieren. Um eine von Können und Aufmerksamkeit des Fahrers unabhängige Optimierung zu ermöglichen, ist die Auswerteeinheit 43 ferner programmiert, um einen Assistenzsystem-Betriebsmodus zu unterstützen, in welchem sie anhand der ermittelten Werte von Kornanteil und Ausdruschverlust die Betriebsparameter optimiert.

Der Betrieb des Segments 31 in der Wirkstellung bewirkt einen erhöhten Energieverbrauch, ein erhöhtes Aufkommen an Nichtkornmaterialien und an Kornbruch, die in den Nutzstrom gelangen. Da die Zeit, die das Segment 31 in der Wirkstellung verbringt, nur ein kleiner Bruchteil der Gesamtbetriebszeit des Mähdreschers ist, bleiben diese Änderungen ohne merkliche Auswirkungen auf den Gesamtenergieverbrauch und auf die Reinheit des Korns, das letztlich in den Korntank gelangt. Gerade weil die Wirkstellung nur zeitweilig eingenommen wird, kann für sie eine sehr kleine Spaltbreite zwischen Segment und Dreschbalken gewählt werden, die einen sehr niedrigen Ausdruschverlust erreicht, im Dauerbetrieb aber möglicherweise zum Aufstauen des Ernteguts in der Trennstufe 6 führen würde.

Ein Teil des in der Wirkstellung des Segments 31 zusätzlich ausgedroschenen Korns verlässt die Trennstufe 6 über die Spalte 34 zwischen den Segmenten und wird deshalb nicht vom Kornsensor 41 erfasst. Um die Empfindlichkeit zu verbessern, mit der der Ausdruschverlust abgeschätzt werden kann, kann daher vorgesehen werden, die Spalte 34 zu verschließen. Vorzugsweise erfolgt eine solche Schließung zeitweilig, d.h. die Spalte 34 sind zwar während des Erntebetriebs meist offen, um wenigstens einen Teil des von den Segmenten 30 ausgedroschenen Korns dem Rückführboden 12 zuzuleiten, können aber durch die Auswerteschaltung 43 geschlossen werden, um dann den Kornanteil des Reststroms im Auswurfkanal 40 in der Ruhestellung bzw. der Wirkstellung des Segments 31 zu messen und daraus den Ausdruschverlust abzuschätzen.

Die Auswerteschaltung 43 kann durch dieselben Schaltungskomponenten implementiert sein wie das aus der bereits zitierten EP 3 076 248 A1 bekannte Fahrerassistenzsystem. Da die die dort beschriebene Rechenvorrichtung bereits mit den zum Verstellen des Dreschwerks benötigten Stellgliedern und diversen Sensoren zum Erfassen von für die Optimierung des Dreschvorgangs relevanten Betriebsparametern verbunden ist, genügt zum Ausführen der hier beschriebenen Erfindung, dass der oben beschriebene Restkornsensors und die zuschaltbaren Nachdrescheinrichtung ergänzt sowie eine entsprechende Erweiterung des Betriebsprogramms der Rechenvorrichtung vorgenommen wird.

### Bezugszeichen

- 1: Fördereinrichtung
- 2: Drescheinrichtung
- 3: Dreschtrommel
- 4: Dreschkorb
- 5: Leittrommel
- 6: Trennstufe
- 7: Gehäuse
- 8: Förderorgan
- 9: Rippe
- 10: Abscheidekorb
- 11: Förderboden
- 12: Rückführboden
- 13: Rutsche
- 14: Gebläse
- 15: Siebboden
- 16: 1. Leitboden
- 17: Schnecke
- 18: 2. Leitboden
- 19: Schnecke
- 20: Eingang
- 21: rohrförmiger Abschnitt
- 22: rohrförmiger Abschnitt
- 23: Ausgang
- 24: Rippe
- 25: Stift
- 26: Dreschbalken
- 27: Trägerbogen
- 28: Stirnleiste
- 29: Stirnleiste
- 30: Segment
- 31: Segment
- 32: Haken
- 33: hintere Kante
- 34: Spalt
- 35: vordere Kante
- 36: Achse
- 37: hintere Kante
- 38: Ausgang
- 39: Rippe
- 40: Auswurfkanal
- 41: Kornsensor
- 42: Prallfläche
- 43: Auswerteschaltung
- 44: Stellzylinder

## Patentansprüche

1. Mähdrescher mit einem Fahrerassistenzsystem, wobei eine Verarbeitungsstufe (2, 6) des Mähdreschers einen Eingang für einen Erntegutstrom, einen ersten Ausgang (23) für einen aus dem Erntegutstrom gewonnenen, an ausgedroschenen Körnern reichen Nutzstrom und einen zweiten Ausgang (38) für einen kornarmen Reststrom aufweist, wobei wenigstens ein Betriebsparameter der Verarbeitungsstufe verstellbar ist, wobei das Fahrerassistenzsystem umfasst:
eine zuschaltbare Nachdrescheinrichtung (31) zur Anbringung am zweiten Ausgang (38) der Verarbeitungsstufe (2, 6),
einen Restkornsensor (41) zum Erfassen eines Anteils von ausgedroschenen Körnern im Reststrom stromabwärts von der Nachdrescheinrichtung (31), **dadurch gekennzeichnet, dass** das Fahrerassistenzsystem umfasst:
eine Auswerteeinrichtung (43), die eingerichtet ist, die Nachdrescheinrichtung (31) zu- und abzuschalten, die Anteile von ausgedroschenen Körnern im Reststrom bei zugeschalteter und bei abgeschalteter Nachdrescheinrichtung zu vergleichen und den wenigstens einen Betriebsparameter der Verarbeitungsstufe anhand des Vergleichs anzupassen.

2. Mähdrescher nach Anspruch 1, **dadurch gekennzeichnet, dass** die Auswerteeinrichtung (43) eingerichtet ist, den wenigstens einen Betriebsparameter (2) zu verändern, wenn die Differenz eine Schwelle überschreitet.

3. Mähdrescher nach einem der vorhergehenden Ansprüche, **dadurch gekennzeichnet, dass** die Nachdrescheinrichtung wenigstens ein radial verstellbares Segment (31) eines Abscheidekorbs (10') umfasst.

4. Mähdrescher nach Anspruch 3, **dadurch gekennzeichnet, dass** das radial verstellbare Segment (31) durch Schwenken um eine Achse (36) verstellbar ist.

5. Mähdrescher nach Anspruch 4, **dadurch gekennzeichnet, dass** die Achse (36) benachbart zu einem Rand des verstellbaren Segments (31) verläuft.

6. Mähdrescher nach Anspruch 4 oder 5, **dadurch gekennzeichnet, dass** das verstellbare Segment sich in Umfangsrichtung eines Trennrotors (8) über einen Teil von dessen Umfang erstreckt und dass die Achse benachbart zu einem bezogen auf die Drehrichtung des Trennrotors (8) vorderen Rand (35) des verstellbaren Segments (31) verläuft.

7. Mähdrescher nach einem der vorhergehenden Ansprüche, **dadurch gekennzeichnet, dass** die Verarbeitungsstufe eine Dreschstufe (2) und eine Trennstufe (6) umfasst und dass der wenigstens eine Betriebsparameter ein Betriebsparameter der Dreschstufe (2) oder der Trennstufe (6) ist.

8. Mähdrescher nach Anspruch Anspruch 7, **dadurch gekennzeichnet, dass** ein Eingang (20) der Trennstufe (6) und der zweite Ausgang (38) sich an entgegengesetzten Enden der Trennstufe (6) befinden.

9. Mähdrescher nach Anspruch 8, **dadurch gekennzeichnet, dass** die Trennstufe (6) einen bezogen auf eine Förderrichtung des Ernteguts vom Eingang (20) der Trennstufe (6) zum zweiten Ausgang (38) stromaufwärtigen Abschnitt, in dem sich der erste Ausgang (23) befindet, und einen stromabwärtigen Abschnitt aufweist, in dem sich die Nachdrescheinrichtung befindet.

10. Mähdrescher nach Anspruch 8, **dadurch gekennzeichnet, dass** der erste Ausgang (23) bezogen auf eine Förderrichtung des Ernteguts vom Eingang (20) der Trennstufe (6) zum zweiten Ausgang (38) langgestreckt ist und dass ein Abschnitt (22) der Trennstufe (6), in dem sich die Nachdrescheinrichtung (31) befindet, in der Förderrichtung mit einem stromabwärtigen Ende des ersten Ausgangs (23) überlappt.

11. Mähdrescher nach Anspruch 6, **dadurch gekennzeichnet, dass** der Trennrotor (8) in einem bezogen auf die Förderrichtung stromaufwärtigen Abschnitt mit einem ersten Typ von Werkzeugen (25) bestückt ist und in einem stromabwärtigen Abschnitt mit einem zweiten Typ von Werkzeugen (26) bestückt ist, die im stromaufwärtigen Abschnitt fehlen.

12. Mähdrescher nach Anspruch 11, **dadurch gekennzeichnet, dass** die Werkzeuge des zweiten Typs in der Förderrichtung mit der zuschaltbaren Nachdrescheinrichtung überlappen.

## Claims

1. A combine harvester with a driver assistance system, wherein a processing stage (2, 6) of the combine harvester has an inlet for a flow of harvested material, a first outlet (23) for a flow of crop which is obtained from the flow of harvested material and which is rich in threshed grain, and a second outlet (38) for a residual flow which is depleted in grain, wherein at least one operating parameter of the processing stage can be adjusted, wherein the driver assistance system comprises:
an activatable rethreshing device (31) for attachment at the second outlet (38) of the processing stage (2, 6),
a residual grain sensor (41) for detecting a proportion of threshed grain in the residual flow downstream of the rethreshing device (31), **characterized in that** the driver assistance system comprises:
an evaluation device (43) which is configured to switch the rethreshing device (31) on and off, to compare the proportions of threshed grain in the residual flow when the rethreshing device is switched on and when it is switched off, and to adjust the at least one operating parameter of the processing stage on the basis of the comparison.

2. The combine harvester according to claim 1, **characterized in that** the evaluation device (43) is configured to vary the at least one operating parameter (2) when the difference exceeds a threshold.

3. The combine harvester according to one of the preceding claims, **characterized in that** the rethreshing device comprises at least one radially adjustable segment (31) of a separating grate (10').

4. The combine harvester according to claim 3, **characterized in that** the radially adjustable segment (31) can be adjusted by pivoting about an axis (36).

5. The combine harvester according to claim 4, **characterized in that** the axis (36) extends adjacent to an edge of the adjustable segment (31).

6. The combine harvester according to claim 4 or claim 5, **characterized in that** the adjustable segment extends in the circumferential direction of a separating rotor (8) over a portion of its circumference and **in that** the axis extends adjacent to a front edge (35) of the adjustable segment (31) with respect to the direction of rotation of the separating rotor (8).

7. The combine harvester according to one of the preceding claims, **characterized in that** the processing stage comprises a threshing stage (2) and a separating stage (6) and **in that** the at least one operating parameter is an operating parameter of the threshing stage (2) or of the separating stage (6).

8. The combine harvester according to claim 7, **characterized in that** an inlet (20) of the separating stage (6) and the second outlet (38) are located at opposite ends of the separating stage (6).

9. The combine harvester according to claim 8, **characterized in that**, with respect to a conveying direction of the harvested material from the inlet (20) of the separating stage (6) to the second outlet (38), the separating stage (6) has an upstream section in which the first outlet (23) is located and a downstream section in which the rethreshing device is located.

10. The combine harvester according to claim 8, **characterized in that** the first outlet (23) extends longitudinally with respect to a conveying direction of the harvested material from the inlet (20) of the separating stage (6) to the second outlet (38), and **in that** a section (22) of the separating stage (6) in which the rethreshing device (31) is located overlaps in the conveying direction with a downstream end of the first outlet (23).

11. The combine harvester according to claim 6, **characterized in that** the separating rotor (8) is fitted with tools (25) of a first type in an upstream section with respect to the conveying direction and is fitted with tools (26) of a second type in a downstream section which are absent in the upstream portion.

12. The combine harvester according to claim 11, **characterized in that** the tools of the second type overlap in the conveying direction with the activatable rethreshing device.

## Revendications

1. Moissonneuse-batteuse comprenant un système d'assistance à la conduite, un étage de traitement (2, 6) de la moissonneuse-batteuse comportant une entrée pour un flux de produit récolté, une première sortie (23) pour un flux utile riche en grains battus prélevé sur le flux de produit récolté, et une seconde sortie (38) pour un flux résiduel pauvre en grains, au moins un paramètre de fonctionnement de l'étage de traitement étant réglable, le système d'assistance à la conduite incluant :
un équipement de postbattage activable (31) à monter à la seconde sortie (38) de l'étage de traitement (2, 6),
un capteur de grains résiduels (41) pour détecter une fraction de grains battus dans le flux résiduel en aval de l'équipement de postbattage (31), **caractérisée en ce que** le système d'assistance à la conduite inclut :
un équipement d'analyse (43) qui est agencé pour activer et désactiver l'équipement de postbattage (31), pour comparer les fractions de grains battus dans le flux résiduel avec l'équipement de postbattage activé et avec l'équipement de postbattage désactivé et pour adapter le au moins un paramètre de fonctionnement de l'étage de traitement à l'aide de la comparaison.

2. Moissonneuse-batteuse selon la revendication 1, **caractérisée en ce que** l'équipement d'analyse (43) est agencé pour modifier le au moins un paramètre de fonctionnement (2) si la différence excède un seuil.

3. Moissonneuse-batteuse selon une des revendications précédentes, **caractérisée en ce que** l'équipement de postbattage inclut au moins un segment réglable radialement (31) d'une corbeille de séparation (10').

4. Moissonneuse-batteuse selon la revendication 3, **caractérisée en ce que** le segment réglable radialement (31) est réglable par pivotement autour d'un axe (36).

5. Moissonneuse-batteuse selon la revendication 4, **caractérisée en ce que** l'axe (36) s'étend au voisinage d'un bord du segment réglable (31).

6. Moissonneuse-batteuse selon la revendication 4 ou 5, **caractérisée en ce que** le segment réglable s'étend dans la direction circonférentielle d'un rotor de séparation (8) sur une partie de sa circonférence et **en ce que** l'axe s'étend au voisinage d'un bord (35) du segment réglable (31) situé à l'avant par rapport au sens de rotation du rotor de séparation (8).

7. Moissonneuse-batteuse selon une des revendications précédentes, **caractérisée en ce que** l'étage de traitement inclut un étage de battage (2) et un étage de séparation (6), et **en ce que** le au moins un paramètre de fonctionnement est un paramètre de fonctionnement de l'étage de battage (2) ou de l'étage de séparation (6).

8. Moissonneuse-batteuse selon la revendication revendication 7, **caractérisée en ce que** l'entrée (20) de l'étage de séparation (6) et la seconde sortie (38) se trouvent à des extrémités opposées de l'étage de séparation (6).

9. Moissonneuse-batteuse selon la revendication 8, **caractérisée en ce que** l'étage de séparation (6) une portion amont par rapport à une direction de convoyage du produit récolté depuis l'entrée (20) de l'étage de séparation (6) jusqu'à la seconde sortie (38), dans laquelle se trouve la première sortie (23), et une portion aval dans laquelle se trouve l'équipement de postbattage.

10. Moissonneuse-batteuse selon la revendication 8, **caractérisée en ce que** la première sortie (23) est allongée par rapport à une direction de convoyage du produit récolté depuis l'entrée (20) de l'étage de séparation (6) jusqu'à la seconde sortie (38), et **en ce qu'**une portion (22) de l'étage de séparation (6), dans laquelle se trouve l'équipement de postbattage (31), chevauche dans la direction de convoyage une extrémité aval de la première sortie (23).

11. Moissonneuse-batteuse selon la revendication 6, **caractérisée en ce que** le rotor de séparation (8) est équipé, dans une portion amont par rapport à la direction de convoyage, d'un premier type d'outils (25) et, dans une portion aval, d'un second type d'outils (26) qui sont absents dans la portion amont.

12. Moissonneuse-batteuse selon la revendication 11, **caractérisée en ce que** les outils du second type chevauchent, dans la direction de convoyage, l'équipement de postbattage activable.
